# EUROPEAN PATENT SPECIFICATION

(11) **EP 0 002 737 B1**
(45) Date of publication and mention of the grant of the patent: **26.08.1981**
(21) Application number: 78101684.5
(22) Date of filing: 15.12.1978
(51) Int. Cl.: C01B 17/74

(54) **A process for making sulfuric acid anhydride and, if desired, sulfuric acid and/or oleum**
Verfahren zur Herstellung von Schwefelsäure-Anhydrid und, wenn erwünscht, Schwefelsäure und/oder Oleum
Procédé de fabrication d'anhydride sulfurique et, si désiré, d'acide sulfurique et/ou d'oléum

(30) Priority: 16.12.1977 US 861182; 20.10.1978 US 953010
(43) Date of publication of application: 11.07.1979
(73) Proprietor: E.I. DU PONT DE NEMOURS AND COMPANY, Wilmington Delaware 19898 (US)
(72) Inventor: Burrus, Harry Otto, Webster Farms Wilmington Del. 19803 (US); Miller, Donald Nelson, Surrey Park Wilmington Del. 19803 (US)
(74) Representative: Abitz, Walter, Dr.-Ing.

## Description

### Technical Field and Background Art

Sulfur trioxide (S0₃) is conventionally produced in the contact process by the catalytic oxidation of sulfur dioxide (SO₂). Many catalysts have been proposed for this reaction, and vanadium pentoxide is the catalyst employed in most commercial operations. The S0₂ used in the process is usually obtained by the oxidation of sulfur or spent sulfuric acid in air.

The art process has created environmental problems due to the release of unconverted S0₂ into the atmosphere and has associated problems with energy recovery, catalyst deterioration, water balance limitations, and corrosion.

From US A 3 592 592 a non-catalytic process is known for making S0₃ by reacting a source of sulfur with oxygen and thereafter cooling the reaction gas to condense and isolate the S0₃. This process requires that the sulfur be reacted in the vapor form and that either a large excess of a Lewis base, e.g. HCI, be present during the reaction or the combustion gas be violently cooled by contact with a cold surface. The process of the present invention does not require the sulfur to be in the vapor phase, nor does it require the Lewis base to prevent decomposition. Finally, the known process does not coproduce oleum or sulfuric acid.

From FR A 355 252 a non-catalytic process is known for making S0₃ by reacting a source of sulfur with oxygen at an elevated pressure. This process employs lower pressures and air. It requires the use of special burning apparatus and condensing lead chambers.

### Summary of the Invention

A new process has been discovered for the production of S0₃ and/or sulfuric acid from a sulfur source, i.e., elemental sulfur, spent sulfuric acid, ammonium sulfate, H₂5 or S0₂. The process involves the non-catalytic oxidation of the sulfur source with oxygen and a recycle containing S0₂ at elevated temperatures and pressures in a suitable reactor, e.g., a burner. The reaction product, SO₂, S0₃ and oxygen, is then condensed to separate liquid S0₃ and the unreacted 0₂ and S0₂ are recycled to the burner. The liquid S0₃ is then distilled to remove the remaining S0₂ and provide an S0₃ product. This product can be blended with water to produce virgin sulfuric acid or with sulfuric acid to produce oleum. If the sulfur source contains hydrogen, the process will coproduce S0₃ and sulfuric acid.

The process of the invention has several advantages over the prior art process, i.e.,
(A) it is noncatalytic,
(B) it is not limited by water balance requirements,
(C) it can produce high quality liquid S0₃, sulfuric acid, or oleum,
(D) it can significantly reduce environmental pollution,
(E) it can coproduce an S0₂ product, and
(G) it is lower in cost as single units larger than those presently available can be designed and operated.

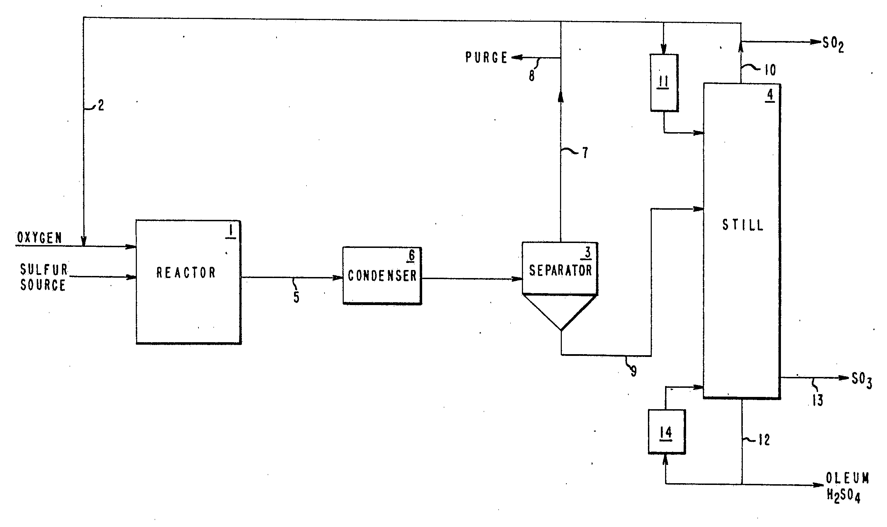

### Description of the Drawing

The FIGURE is a flow diagram of an embodiment of the process of the invention.

### Disclosure of the Invention

The process of the invention will preferably use free sulfur as a feed material. This sulfur usually contains some impurities, generally of the order of 0.5% by weight organics. However, the process is also useful with other forms of sulfur, such as spent sulfuric acid, ammonium sulfate, H₂S, S0₂ or mixtures of these materials; the term "sources of sulfur" as used in the description and claims includes all these embodiments. Spent sulfuric acid is sulfuric acid that has been used in an industrial process and often contains organics.

When elemental sulfur or S0₂ are used as the feed material, the product produced will be practically all S0₃. When the sulfur source employed contains hydrogen in some form, such as in spent sulfuric acid, ammonium sulfate or H₂5, the process will coproduce sulfuric acid.

In some instances it may be desirable to have a mixture as the sulfur source, e.g., a mixture of S0₂ and H₂5 or of elemental sulfur and spent sulfuric acid. When a mixture of elemental sulfur and spent acid is fed to a burner, preferably the amount of spent acid (as sulfur equivalent) will not exceed 15% by weight of the total sulfur fed to the reactor. If such a mixture is fed to a reactor that employs indirect or both indirect and direct heating, the amount of spent acid can exceed 15%.

The H₂5 or S0₂ to be used in the process will ordinarily have to be treated to remove impurities that would create separation problems in the process, e.g., metal salts should be removed.

The process of the invention employs oxygen as another feedstock. This oxygen can be of the quality presently commercially available, i.e., it can contain small amounts of inerts such as nitrogen. The total amount of oxygen supplied (as feedstock and recycle) should be in excess of that required to oxidize all the sulfur to S0₃.

The other feedstock to the reactor 1 is a recycle stream 2 containing SO₂. This stream can be composed of the overhead 7 from the separator 3, the overhead 10 from the distillation column 4, and recovered S0₂ from the purge gas. It is composed of oxygen, S0₂, and minor amounts of nitrogen, nitrogen oxides, S0₃ and carbon oxides.

The recycle stream 2 serves mainly to maintain temperature control in the reactor 1. Thus the amount of sulfur dioxide in the recycle will depend upon the desired reactor conditions and the product composition.

The sulfur fed into the reactor will be at a temperature above its melting point. Any spent acid used will generally be at ambient temperature.

The gaseous feed stream into the reactor, the oxygen and recycle stream, and optionally H₂5 or S0₂ will be at elevated pressures up to 34.5 MPa gauge i.e. between 3.45 and 34.5 MPa gauge. At pressure below 3.45 MPa gauge the desired reaction will not be obtained; and if pressures above 34.5 MPa gauge are employed, the formation of nitrogen oxides is enhanced.

The reactor 1 is a burner of suitable design to withstand the high temperatures and pressures involved, e.g., a ceramic-lined steel shell, such as those used for coal gasification or the partial oxidation of hydrocarbon feedstocks. Although a burner is the preferred embodiment, in some instances it may be desirable to employ indirect heating to the reactor.

Within the reactor the sulfur, recycle stream and oxygen are reacted at temperatures of 500 to 2,000°C and pressures of 3.45 to 34.5 MPa gauge. In a preferred embodiment when the sulfur source is elemental sulfur, the temperature will be about 1,000 to 1,200°C, more preferably 1,100°C and the pressure between 6.9 and 13.8 MPa gauge, more preferably, between 9.0 and 9.7 MPa gauge. Under these conditions about 25 to 35%, preferably about 30% of the total sulfur is converted into 50₃ in the reactor. When the sulfur source is a mixture of elemental sulfur and spent sulfuric acid, the preferred temperatures are 1,000 to 1,200°C and the pressures are preferably 13.8 to 34.5 MPa gauge.

The reactor or burner effluent 5 is a gas stream containing oxygen, nitrogen, nitrogen oxides, SO₂, S0₃, C02 and water. This stream is fed into a condenser 6 wherein its temperature is reduced to about 75°C, i.e., within the range of 50° to 100°C. This temperature range is desired to provide the best separation of S0₃ in the subsequent steps. This range also provides a high energy recovery since, if desired, the stream can first be fed into a waste heat boiler or boilers to recover part of the heat in the stream as steam. However, in some instances it may be desirable to use refrigerated cooling and employ temperatures below 50°C.

In preferred embodiments the product of the reactor is fed to waste heat boilers to recover superheated, high pressure steam. In other embodiments this product can be fed into a turbine to recover some of the energy and then to waste heat boilers.

The cooled gas stream is then fed into a separator 3 wherein most of the unreacted oxygen, nitrogen, nitrogen oxides, CO₂ and part of the S0₂ is removed overhead 7 and recycled to the burner. A part of this overhead can be purged 8 to remove inert gases that would otherwise build up in the process, e.g., nitrogen, nitrogen oxides, and any hydrocarbon impurities present in the sulfur source. The purge stream can be treated by various conventional treatments (not illustrated), e.g., rectifying column, condenser, and water scrubbing with hydrogen peroxide or caustic, to recover most of the SO₂/S0₃ present. If desired, the bottoms from the rectifying column can be recycled to the reactor.

The bottoms 9 from the separator are fed into the still 4. These bottoms are composed mainly of SO₂/S0₃, with minor amounts of oxygen, sulfuric acid, and CO2, Within the still the stream is heated to separate the S0₃ from the other components. The still will operate at pressures less than critical for the components being separated as is convention in the art.

From the top of the still an overhead stream 10 is taken off. This stream will be practically all S0₂ with some oxygen and CO₂, If desired, part of the overhead can be fed into a condenser 1 where it is condensed and fed as refluxed back into the still 4.

If desired, S0₂ can be recovered as a product from the top of the still. This stream could be taken off and purified by conventional means (not illustrated) to remove dissolved impurities and inerts. For example, any S0₃ present can be removed by contacting the stream with elemental sulfur in a packet column; the stream would then be condensed and any C0₂ and O₂ present flashed off.

The bottom 12 from the still is essentially all S0₃ with some sulfuric acid, i.e., the sulfuric acid from the separator. The bottoms can be diluted with water and cooled to produce oleum and/or sulfuric acid. Part of the bottoms can be reheated in a reboiler 14 and recycled to the still to provide heat for the distillation.

A side stream 13 from the still is almost pure S0₃ and can be cooled and stored without further treatment.

The overhead stream 10 from the still and the overhead stream 7 from the separator are combined into a recycle stream 2 and fed into the reactor. This recycle stream not only serves as a source of sulfur, but also assists in maintaining the desired temperature in the reactor. If spent acid or the like was used as a part of the feedstock, the overhead streams may need to be treated by conventional means to prevent a build-up of CO₂ in the process.

The following example is offered to illustrate a possible embodiment of the process of the invention when free sulfur is employed as the sulfur source. All parts are by weight unless otherwise indicated.

### Example

Into a ceramic-lined reactor 1 which operates at 1,100°C and 9.24 MPa gauge is fed 5,442 parts per hour of free sulfur. This sulfur contains in addition 27 parts per hour of organics. The sulfur is at a temperature of 140°C.

Also into the reactor are fed 8,886 parts per hour of oxygen at 9.24 MPa gauge which contain in addition 39 parts per hour of nitrogen. A recycle stream 2 of 56,524 parts per hour is also fed to the reactor.

The reaction product 5 from the reactor is at 1,100°C and 9.24 MPa gauge and contains 17,280 parts per hour oxygen, 1,033 parts per hour nitrogen and nitrogen oxides, 31,841 parts per hour 50₂, 17,058 parts per hour S0₃, 35 parts per hour H₂0, and 3,672 parts per hour CO₂ along with other minor components formed in the process. This reaction product is cooled to 120°C in a waste heat boiler and further cooled in a condenser 6 to 75°C.

The stream is then fed into a separator 3. The overhead 7 from the separator is at 75°C and is composed of 16,538 parts per hour of oxygen, 1,015 parts per hour of nitrogen, 9,745 parts per hour of SO₂, 3,455 parts per hour S0₃ and 2,696 parts per hour CO₂, A purge 8 is taken from this overhead to remove inerts, i.e., a purge of 759 parts per hour. The remainder makes up part of the recycle stream 2.

The bottoms 9 from the separator is also at 75°C and is composed of 742 parts per hour oxygen, 17 parts per hour nitrogen, 22,096 parts per hour S0₂, 13,446 parts per hour S0₃, 192 parts per hour H₂S0₄ and 977 parts per hour CO₂. This stream is fed into the still 4 wherein the S0₂ and inerts are separated from the S0₃.

The bottoms 12 from the still is 11,403 parts per hour of S0₃ and 192 parts per hour H₂SO₄. This stream can be diluted with water to produce oleum or sulfuric acid.

A side stream 13 from the still will be 2,040 parts per hour of S0₃.

The overhead from the still will be 23,834 parts per hour, of which 22,096 parts per hour is S0₂. This stream is combined with the overhead from the separator to make up the recycle stream 2.

## Claims

1. A non-catalytic process for making S0₃ by reacting a source of sulfur with oxygen at an elevated pressure, characterized by
(a) reacting a source of sulfur wherein the source is elemental sulfur, S0₂ or their mixture, and a recycle containing SO₂ with oxygen at a temperature of 500° to 2,000°C and 3.45 to 34.5 MPa gauge to produce a gas containing O2, _{S02} and S0₃;
(b) cooling the gas to condense and separate S0₃ from gaseous S0₂ and O2, and recycling the gaseous S0₂ and 0₂ to the reactor;
(c) feeding the S0₃ to a still wherein the remaining SO₂ and O2 are separated from the S0₃, the SO₂ and O2 being taken off overhead as a gas and at least a portion thereof recycled to the reactor and the S0₃ taken off as a liquid product.

2. The process of Claim 1 wherein sulfur is reacted at a temperature of 1,000° to 1,200°C and 6.9 to 13.8 MPa gauge.

3. The process of Claim 1, wherein the pressure is 9.0 to 9.7 MPa gauge.

4. The process of Claim 1 wherein part of S0₂ taken off overhead from the still is removed from the recycled stream and recovered.

5. A non-catalytic process for making S0₃ and sulfuric acid and/or oleum by reacting a source of sulfur with oxygen at an elevated pressure characterized by
(a) reacting a source of sulfur wherein part of the source is spent sulfuric acid, ammonium sulfate, H₂5 or their mixtures, and a recycle containing SO₂ with oxygen at a temperature of 500° to 2,000°C and 3.45 to 34.5 MPa gauge to produce a gas containing O2, SO₂, H₂0 and S0₃;
(b) cooling the gas to condense and separate S0₃ and sulfuric acid and/or oleum from gaseous S0₂ and O₂, and recycling the gaseous S0₂ and 0₂ to the reactor;
(c) feeding the S0₃ and sulfuric acid and/or oleum to a still wherein the remaining S0₂ and 0₂ are separated from the S0₃, and sulfuric acid and/or oleum, the S0₂ and 0₂ being taken off overhead as a gas and at least a portion thereof recycled to the reactor, and the S0₃ and sulfuric acid and/or oleum taken off as liquid products.

6. The process of Claim 5 wherein the source of sulfur is a mixture of S0₂ and H_{Z}S.

7. The process of Claim 5 wherein the source of sulfur is a mixture of sulfur and spent sulfuric acid, and the temperature is between 1,000° and 2,000°C.

8. The process of Claim 1 or 5 wherein the gas from the reactor is fed to waste heat boiler, or turbine or both prior to being condensed to separate the S0₃ or S0₃ and sulfuric acid and/or oleum.

## Revendications

1. Procédé non catalytique de fabrication de S0₃ par réaction d'une source de soufre avec de l'oxygène à une pression élevée, caractérisé par les étapes suivantes:
(a) faire réagir avec de l'oxygène une source de soufre qui est du soufre élémentaire, du S0₂ ou un mélange de ceux-ci, et un courant de recyclage contenant du SO₂, à une température de 500 à 2000°C et à une pression relative de 3,45 à 34,5 MPa pour produire un gaz contenant 0₂, S0₂ et S0₃,
(b) refroidir le gay pour condenser et séparer le S0₃ du S0₂ gazeux et de l'oxygène et recycler ces derniers au réacteur,
(c) amener le S0₃ à un appareil à distiller dans lequel on en sépare le SO₂ et l'oxygène restants que l'on retire à le tête sous forme de gaz et dont on recycle au moins une portion au réacteur, le S0₃ étant retiré comme produit liquide.

2. Procédé selon la revendication 1, caractérisé en ce que l'on fait réagir le soufre à une température de 1000 à 1200°C et à une pression relative de 6,9 à 13,8 MPa.

3. Procédé selon la revendication 1, caractérisé en ce que la pression relative est de 9,0 à 9,7 MPa.

4. Procédé selon la revendication 1, caractérisé en ce que une partie de S0₂ tiré en tête de l'appareil à distiller est retirée du courant recyclé et récupérée.

5. Procédé non catalytique de fabrication de S0₃ et d'acide sulfurique et/ou d'oléum par réaction d'une source de soufre avec de l'oxygène à une pression élevée, caractérisé par les étapes suivantes:
(a) faire réagir avec de l'oxygène une source de soufre formée en partie d'acide sulfurique usé, de sulfate d'ammonium, de H₂S ou d'un mélange de ceux-ci, et un courant de recyclage contenant du SO₂, à une température de 500 à 2000'C et à une pression relative de 3,45 à 34,5 MPa pour obtenir un gay contenant O2, S0₂, H₂0 et S0₃,
(b) refroidir le gay pour condenser et séparer le S0₃ et l'acide sulfurique et/ou l'oléum du S0₂ gazeux et de l'oxygène, et recycler ces derniers au réacteur,
(c) amener le S0₃ et l'acide sulfurique et/ou l'oléum à un appareil à distiller dans lequel on sépare du S0₃ et de l'acide sulfurique et/ou de l'oléum le S0₂ et l'oxygène restants que l'on retire à la tête sous forme de gaz et dont on recycle au moins une partie au réacteur, le S0₃ et l'acide sulfurique et/ou l'oléum étant retirés comme produits liquides.

6. Procédé selon la revendication 5, caractérisé en ce que la source de soufre est un mélange de S0₂ et H₂S.

7. Procédé selon la revendication 5, caractérisé en ce que la source de soufre est un mélange de soufre et d'acide sulfurique usé, et la température est de 1000 à 2000°C.

8. Procédé selon la revendication 1 ou 5, caractérisé en ce que l'on amène le gay venant du réacteur à une chaudière de récupération ou à une turbine ou à toutes les deux, avant de le condenser pour séparer le S0₃, ou le S0₃ et l'acide sulfurique et/ou l'oléum.

## Patentansprüche

1. Nicht-katalytisches Verfahren zur Herstellung von SO₃ durch Umsetzung einer Schwefelquelle mit Sauerstoff bei erhöhtem Druck, dadurch gekennzeichnet, dass man
(a) eine Schwefelquelle, wobei diese Quelle elementarer Schwefel, S0₂ oder deren Mischung ist, und eine Rückführungsgut, enthaltend S0₂, mit Sauerstoff bei einer Temperatur von 500° bis 2000°C und einem Überdruck von 3,45 bis 34,5 MPa zur Herstellung eines O₂, S0₂ und S0₃ enthaltenden Gases umsetzt;
(b) das Gas zur Kondensierung und Abtrennung des S0₃ von dem gasförmigen S0₂ und 0₂ abkühlt, und das gasförmige S0₂ und 0₂ zu dem Reaktionsgefäss zurückführt;
(c) das S0₃ zu einer Destillationsvorrichtung ' führt, in welcher restliche S0₂ und 0₂ von dem S0₃ abgetrennt werden, wobei das S0₂ und O₂ am Kopf als Gas entnommen werden und wenigstens ein Teil von ihnen zu dem Reaktionsgefäss zurückgeführt wird und das S0₃ als flüssiges Produkt entnommen wird.

2. Verfahren nach Anspruch 1, in welchem Schwefel bei einer Temperatur von 1000° bis 1200°C und einem Überdruck von 6,9 bis 13,8 MPa umgesetzt wird.

3. Verfahren nach Anspruch 1, in welchem der Druck ein Überdruck von 9,0 bis 9,7 MPa ist.

4. Verfahren nach Anspruch 1, in welchem ein Teil des am Kopf der Destillationsvorrichtung entnommenen S0₂ aus dem zurückgeführten Strom entnommen und gewonnen wird.

5. Nicht-katalytisches Verfahren zur Herstellung von S0₃ und Schwefelsäure und/ .oder Oleum durch Umsetzung einer Schwefelquelle mit Sauerstoff bei erhöhtem Druck, dadurch gekennzeichnet, dass man
(a) eine Schwefelquelle, wobei ein Teil dieser Quelle verbrauchte Schwefelsäure, Ammoniumsulfat, H₂S oder Mischungen von diesen ist, und ein Rückführungsgut, enthaltend S0₂ mit Sauerstoff bei einer Temperatur von 500° bis 2000°C und einem Überdruck von 3,45 bis 34,5 MPa zur Erzeugung eines O₂, S0_{2'} H₂0 und S0₃ enthaltenden Gases umsetzt;
(b) das Gas zur Kondensierung und Abtrennung des S0₃ und der Schwefelsäure und/oder des Oleums von gasförmigem S0₂ und 0₂ abkühlt und das gasförmige SO₂ und O₂ zu dem Reaktionsgefäss zurückführt;
(c) das S0₃ und die Schwefelsäure und/oder das Oleum zu einer Destillationsvorrichtung führt, in welcher restliche S0₂ und O₂ von dem S0₃ und der Schwefelsäure und/oder dem Oleum abgetrennt werden, wobei S0₂ und O₂ am Kopf als Gas entnommen werden, und wenigstens ein Teil von diesen zu dem Reaktionsgefäss zurückgeführt wird, und das S0₃ und die Schwefelsäure und/oder das Oleum als flüssige Produkte entnommen werden.

6. Verfahren nach Anspruch 5, in welchem Schwefelquelle eine Mischung von S0₂ und H₂S ist.

7. Verfahren nach Anspruch 5, in welchem Schwefelquelle eine Mischung von Schwefel und verbrauchter Schwefelsäure ist und die Temperatur zwischen 1000° und 2000°C liegt.

8. Verfahren nach Anspruch 1 oder 5, in welchem das Gas aus dem Reaktionsgefäss in einen Abhitzekessel oder eine Turbine oder in beide geführt wird, bevor es zur Abtrennung des S0₃ oder des S0₃ und der Schwefelsäure und/ oder des Oleum kondensiert wird.
